# EUROPEAN PATENT APPLICATION

(11) **EP 4 477 052 A1**
(43) Date of publication of application: **18.12.2024**
(21) Application number: 24179319.9
(22) Date of filing: 31.05.2024
(51) Int. Cl.: A01G 3/053, A01G 3/06, A01G 3/08

(54) **MACHINE FOR MAINTENANCE OF EXTERNAL AREAS**

(30) Priority: 15.06.2023 IT 202300012369
(71) Applicant: Stiga S.p.A., 31033 Castelfranco Veneto (TV) (IT)
(72) Inventor: RIGONI, Mattia, 31015 Conegliano (TV) (IT); CAMERON, James, 31030 Casier (TV) (IT); TOLOTTO, Daniele, 31040 Chiarano (TV) (IT); MARTONE, Dario, 35138 Padova (PD) (IT); D'AGOSTINI, Mauro, 35018 San Martino di Lupari (PD) (IT); ZANOLIN, Alessandro, 35010 Trebaseleghe (PD) (IT); ZONTA, Paolo, 31033 Castelfranco Veneto (TV) (IT); CALLEGARO, Antonio, 31100 Treviso (IT)
(74) Representative: PGA S.p.A.

(57) **Abstract**

The present invention relates to a machine for the maintenance of a land or garden, which comprises a main body (2), a work head (3) carried by the main body (2) and configured to operate on the land to be maintained, a battery (33) carried by the main body (2) on the side opposite the work head (3), a control unit (10) connected to the work head (3) and to the battery (33). Wherein the control unit (10) comprises an electronic board (14) carried by an intermediate section (2c) of the main body (2) between the work head (3) and the battery (33).

## Description

### FIELD OF THE INVENTION

The present invention relates to a machine for the maintenance of lands or gardens, for example grass mowing operations and/or pruning operations on plants, shrubs and hedges, for example a machine usable as a brush cutter and/or as a turf trimmer.

### STATE OF THE ART

Cutting machines for executing maintenance operations, such as mowing turfgrass and pruning plants, such as pruning hedges, are known in the field of gardening and land maintenance.

Such cutting machines commonly comprise a handle which the operator grasps to handle the cutting machine, e.g., to orient the machine in the desired direction to execute the maintenance operations. The handle can be rotated as desired to allow the operator to work in the most comfortable position.

The controls which allow the operator to drive the work head or vary the operating speed thereof according to need are usually found on such a handle. Such controls of the handle are connected to an electronic board which is located in the main body of the machine; the connection occurs by means of cables which are located outside the handle, exposed outside the machine.

However, during the use of the described machines, it can be necessary to operate in hostile environments, such as reeds or environments characterized by the presence of branches, shrubs or weeds which could damage cables exposed outside the machine, causing, for example, surface cuts or entirely cutting the cables themselves.

### OBJECT OF THE INVENTION

Therefore, the object of the present invention is to solve at least one of the drawbacks and/or limitations of the previous solutions.

A first objective is to provide a cutting machine for the maintenance of gardens and/or land capable of facilitating the maintenance operations.

A further objective is to provide a cutting machine for the maintenance of gardens and/or land capable of making the maintenance operations easier for the operator.

A further objective is to provide a cutting machine for the maintenance of gardens and/or land capable of being able to be used in hostile environments.

A further objective is to provide a cutting machine for the maintenance of gardens and/or land capable of improving the final result of the maintenance operations, i.e., of improving the effectiveness of the cutting machine.

A further objective is to provide a cutting machine for the maintenance of gardens and/or land capable of allowing the operator to easily and quickly find the best postural position for executing the maintenance operations.

These and still other objects, which will appear more clearly from the following description, are substantially achieved by a machine for the maintenance of land or gardens in accordance with one or more of the appended claims and/or the following aspects.

### SUMMARY

Aspects of the present invention are disclosed here below.

In a 1st aspect, a machine (1) is provided for executing maintenance operations of a land or garden, said machine (1) comprising:
- a main body (2) which extends in length between a first end (2a) and a second end (2b), said main body (2) being, at least partly, internally hollow;
- a work head (3) configured to execute said maintenance operations of a land or garden, said work head (3) being carried by said main body (2) at said first end (2a);
- a handle (4) configured to allow the gripping of said machine (1), said handle (4) being constrained to said main body (2) at a portion of said main body (2) comprised between said first end (2a) and said second end (2b), said handle (4) being, at least partly, internally hollow and comprising:
   ∘ a control portion (4a) configured to allow a user to control the maintenance operations of a land or garden executed by said work head (3);
   ∘ a constraining portion (4b) for constraining to said main body (2), and
- at least one cable (6) extending between said control portion (4a) and said constraining portion (4b),
in which a portion of said at least one cable (6) extends inside said handle (4).

In a 2nd aspect according to the preceding aspect, the cable (6) is configured to transmit electric current.

In a 3rd aspect according to any one of the preceding aspects, the cable (6) is configured to exchange signals. In a 4th aspect according to any one of the preceding aspects, the cable (6) is configured to transmit data.

In a 5th aspect according to any one of the preceding aspects, said at least one cable (6) extends entirely inside said handle (4) from said control portion (4a) to said constraining portion (4b).

In a 6th aspect according to any one of the preceding aspects, said handle (4) is removably mounted on the main body (2).

In a 7th aspect according to any one of the preceding aspects, said handle (4) is movable by rotation about an orientation axis (O) in a plurality of stable engagement positions angularly offset from each other.

In an 8th aspect according to the preceding aspect, said orientation axis (O) is transverse or perpendicular to a longitudinal extension axis (A) of said main body (2).

In a 9th aspect according to any one of the preceding aspects, the machine (1) comprises a plug (7) which interacts between said handle (4) and a support (5) integral with said main body (2).

In a 10th aspect according to the preceding aspect, said plug (7) extends radially from said constraining portion of the handle (4) in the direction of said support (5).

In an 11th aspect according to the 9th or 10th aspect, said support defines a seat (8) configured to receive said handle (4), optionally said seat (8) having a substantially cylindrical shape.

In a 12th aspect according to the preceding aspect, a slot (9) is obtained in said seat (8), said slot (9) being configured to receive said plug (7), and in which said constraining portion (4b) rigidly carries said plug (7) which is inserted in said slot (9).

In a 13th aspect according to the 11th aspect, a slot (9) is obtained in said constraining portion (4b), said slot (9) being configured to receive said plug (7), and in which said seat (8) rigidly carries said plug (7) which is inserted in said slot (9).

In a 14th aspect according to the 12th or 13th aspect, said slot (9) is of elongated shape.

In a 15th aspect according to the 12th or 13th or 14th aspect, said slot (9) has a substantially symmetrical shape with respect to a respective axis of symmetry (S), said axis of symmetry (S) being orthogonal with respect to a longitudinal extension axis of said main body (2).

In a 16th aspect according to any one of the preceding aspects from the 12th to the 15th in combination with the 7th aspect, said slot (9) in cooperation with said plug (7) delimit a maximum angular excursion of said handle (4) about said orientation axis (O).

In a 17th aspect according to the preceding aspect, said maximum angular excursion is less than 180°.

In an 18th aspect according to any one of the two preceding aspects, said maximum angular excursion is less than 100°.

In a 19th aspect according to any one of the three preceding aspects, said handle (4) is stably engageable with said support (5) in any angular position comprised in said maximum angular excursion.

In a 20th aspect according to any one of the preceding aspects, the support (5) comprises a first half part (5a) fixed to said main body (2) and a second half part (5b) adjustable and fixable to said first half part to angularly lock said constraining portion (4b) with respect to said seat (8).

In a 21st aspect according to the preceding aspect, said first and said second half part (5a, 5b), in a coupling condition with each other, delimit said seat (8) and receive the constraining portion (4b) of said handle (4).

In a 22nd aspect according to any one of the aspects from the 11th to the 21st, said handle (4) can be placed in an ideally infinite number of intermediate positions each characterized by a different angular position of said constraining portion (4b) in said seat (8).

In a 23rd aspect according to any one of the preceding aspects, the machine (1) comprises at least one control unit (10) connected to said at least one cable.

In a 24th aspect according to the preceding aspect, said at least one cable comprises a plurality of cables (6), said plurality of cables comprising:
- one or more drive cables (6a) connecting the work head (3) with the control unit (10) and/or with a power supply battery (33);
- one or more control cables (6b) connecting the control portion (4a) with the control unit (10) and/or with the power supply battery.

In a 25th aspect according to the preceding aspect, the control unit (10) is configured to exchange signals with said work head (3) and with said control portion (4a) respectively through said one or more drive cables (6a) and said one or more control cables (6b) so as to control said land or garden maintenance operations.

In a 26th aspect according to any one of the preceding aspects, said machine (1) is a brush cutter or a turf trimmer.

In a 27th aspect according to any one of the preceding aspects, in combination with the 24th aspect, each drive cable (6a) comprises a preponderant portion (6a') passing through said main body (2) and terminally connected to said work head (3).

In a 28th aspect according to any one of the preceding aspects in combination with the 24th or 25th or 27th aspect, each of said one or more control cables (6b) extends inside the handle (4) from said control portion (4a) to said constraining portion (4b).

In a 29th aspect according to the preceding aspect, an end portion of each of said one or more control cables (6b) passes through a through window (13) defined by the first half part (5a) of the support (5) and connects with the control unit (10).

In a 30th aspect according to any one of the preceding aspects from the 24th to the 29th, said control unit (10) comprises at least one electronic board (14) accommodated in a protective casing (15) fixed to said main body (2).

In a 31st aspect according to any one of the preceding aspects from the 24th to the 30th, said control portion (4a) comprises a user interface (16).

In a 32nd aspect according to the preceding aspect, said user interface (16) is configured to receive commands by means of contact with a user's hand and generate corresponding control signals conveyed to the control unit (10) through said one or more control cables (6b).

In a 33rd aspect according to the preceding aspect, the user interface (16) comprises one or more keys (17) configured to generate one or more of said control signals upon the action of a user's hand.

In a 34th aspect according to the preceding aspect, the user interface (16) comprises one or more contact sensors configured to generate one or more of said control signals upon the contact of a user's hand.

In a 35th aspect according to any one of the aspects from the 9th to the 34th, the support (5) defines a further seat (11) arranged to receive a portion of the main body (2) and to allow the adjustment of the position of the support and thus of the handle (4) along the main body (2) and/or around the longitudinal extension axis (A) of the latter.

In a 36th aspect according to the preceding aspect, the support (5), for example the first half part (5a), comprises a cover (12) removably engaged to the same first half part on the opposite side with respect to the seat (8) and adapted to form, in cooperation with the first half part (5a), said further seat (11).

In a 37th aspect according to the 35th or 36th aspect, the cover (12) can be fixed to the rest of the support (2), for example to the first half part (5a) with mechanical connections such as threaded elements, snap-engagement teeth or still other and, once fixed, said cover cooperates with the rest of the support to block an axial and angular sliding of the main body (2) in the seat (11).

In a 38th aspect, a machine is provided for the maintenance of a land or garden comprising:
- a main body (2) extending in length between a first and a second end (2a, 2b),
- a work head (3) carried by the main body (2) at the first end (2a) and configured to operate on the ground to be maintained,
- a battery (33) carried by the main body (2) at the second end (2b),
- a control unit (10) connected to the work head (3) and to the battery (33),
in which said control unit (10) comprises an electronic board (14) carried by an intermediate section (2c) of the main body (2) between the work head (3) and the battery (33).

In a 39th aspect according to the preceding aspect, the electronic board (14) of the control unit (10) is closer to the battery (33) than to the work head (3).

In a 40th aspect according to any one of the two preceding aspects, the electronic board (14) is at a minimum distance (Dm) from the battery (33) by a measurement not exceeding 1/3 of an overall extension of the same main body (2) measured along a longitudinal extension axis (A),

In a 41st aspect according to any one of the three preceding aspects, the electronic board (14) is spaced apart from the work head (3) by an amount measured parallel to the longitudinal extension axis (A) comprised between 200mm and 1500mm, optionally comprised between 600mm and 1200mm.

In a 42nd aspect according to any one of the preceding aspects from the 38th to the 41st, the machine comprises a handle (4) constrained to the intermediate section (2c) of the main body (2) and configured to allow a user to grip the machine (1).

In a 43rd aspect according to the preceding aspect, the electronic board (14) of the control unit (10) is located near, optionally at, the handle (4).

In a 44th aspect according to any one of the two preceding aspects, the handle (4) comprises:
- a control portion (4a) having a user interface (16), optionally comprising one or more keys (17) or other contact sensors, configured to receive commands by means of contact with a hand of a user and generate corresponding control signals to control the operations of the work head (3),
- a constraining portion (4b) engaged to the main body (2), optionally by means of a support (5),
in which the electronic board (14) of the control unit (10) is at the constraining portion (4b).

In a 45th aspect according to any one of the preceding aspects from the 38th to the 44th, the machine comprises a protective casing (15) which wraps at least part of the intermediate section (2c) of the main body (2) to form a compartment (23) for housing the electronic board (14) of the control unit (10).

In a 46th aspect according to the two preceding aspects, the handle (4) is at least partially housed in the compartment (23) of the protective casing (15).

In a 47th aspect according to any one of the two preceding aspects, the protective casing (15) comprises one or more slits (24) for putting the compartment (23) in communication with an environment outside the same protective casing (15).

In a 48th aspect according to the preceding aspect, said one or more slits (24) are facing the electronic board (14) of the control unit (10).

In a 49th aspect according to any one of the preceding aspects from the 38th to the 48th, the machine comprises a heat sink (45), optionally a lamellar heatsink, in contact with the electronic board (14).

In a 50th aspect according to the preceding aspect, the heat sink (45) constrains the electronic board (14) to the protective casing (15).

In a 51st aspect according to any one of the two preceding aspects, the heat sink (45) comprises at least one dissipation area (46) thermally connected to the electronic board (14) to release heat in an environment outside the machine (1).

In a 52nd aspect according to any one of the three preceding aspects, a/the dissipation area (46) defines a preponderant part of, or all of, an outer peripheral surface of the protective casing (15).

In a 53rd aspect according to any one of the two preceding aspects, the dissipation area (46) being made of metallic material such as copper or aluminium.

In a 54th aspect according to any one of the preceding aspects from the 38th to the 53rd, the main body (2) has a hollow tubular shape, optionally cylindrical or prismatic tubular, which peripherally delimits an internal volume (25) which places the work head (3) in communication with the battery (23).

In a 55th aspect according to any one of the preceding aspects from the 38th to the 54th, the main body (2) comprises a passage opening (26) defined on the intermediate section (2c) of the same main body, which places the compartment (23) of the protective casing (15) in communication with the/an internal volume (25) of the main body (2).

In a 56th aspect according to the preceding aspect, the passage opening (26) of the main body (2) is inside the protective casing (15).

In a 57th aspect according to any one of the preceding aspects from the 38th to the 56th, the work head (3) comprises:
- an electric-type motor (22),
- a housing (27) engaged to the main body (2) and housing the motor (22), wherein said housing (27) comprises a shank (21a), radially outside the main body (2) and configured to couple with the first end (2a) of the same main body (2), said shank (21a) having an access (28) which places the/an internal volume (25) of the main body (2) in communication with the motor (22).

In a 58th aspect according to any one of the preceding aspects from the 38th to the 57th, the work head (3) further comprises a gas passage (29) radially outside the motor (22) and configured to channel, towards the internal volume (25) of the main body (2) and through the access (28), a gas coming from an environment outside the machine (1).

In a 59th aspect according to the preceding aspect, the gas passage (29) of the work head (3) is radially interposed between the motor (22), optionally a stator of the motor (22), and an inner surface (31) of the housing (27).

In a 60th aspect according to any one of the two preceding aspects, the gas passage (29) of the work head (3) extends axially, parallel to a rotation axis (W) of the motor (22), between the access (28) and an end (32) of the housing (27) opposite the access (28) with respect to the motor (22).

In a 61st aspect according to any one of the preceding aspects from the 38th to the 60th, the work head (3) further comprises:
- a cutting head (18) carried by the motor (22) and configured to operate on the land to be maintained,
- a shaft (20) connecting the motor (22) to the cutting head (18) for moving, optionally rotating, the same cutting head about a rotation axis (W), parallel to an extension direction of the shaft (20),
- a fan (30) keyed on the shaft (20) in interposition between the cutting head (18) and the motor (22).

In a 62nd aspect according to the preceding aspect, the gas passage (29) of the work head (3) faces the fan (30) to introduce the gas from an environment outside the machine (1) into the housing (27).

In a 63rd aspect according to any one of the preceding aspects from the 58th to the 62nd, the gas passage (29) of the work head (3) communicates, by means of the main body (2) and theta through opening (26) of the same main body, with theta compartment (23) of the casing (15).

In a 64th aspect according to any one of the preceding aspects from the 38th to the 63rd, the machine comprises a battery holder (34) engaged to the main body (2) and in turn comprising:
- a battery support (36) configured to accommodate the battery (33),
- an outer shell (37) at least partially surrounding the battery support (36), forming a gap (38).

In a 65th aspect according to the preceding aspect, the outer shell (37) has a fitting (21b) radially outside the main body (2) and configured to couple with the second end (2b) of the same main body (2).

In a 66th aspect according to the preceding aspect, said battery fitting (21b) has an inlet (35) which puts the/an internal volume (25) of the main body (2) in communication with the gap (38).

In a 67th aspect according to any one of the three preceding aspects, the outer shell (37) of the battery holder (34) comprises one or more slots (39) for putting the gap (38) in communication with an environment outside the machine (1), in which said one or more slots (39) are facing the battery (33).

In a 68th aspect according to any one of the preceding aspects from the 38th to the 67th, the machine comprises a plurality of cables (6) electrically connected to the electronic board (14) of the control unit (10) and at least in part housed in an/the internal volume (25) of the main body (2).

In a 69th aspect according to the preceding aspect, the plurality of cables (6) comprises:
- one or more drive cables (6a) connecting the work head (3), optionally the motor (22), with the electronic board (14) of the control unit (10),
- one or more control cables (6b) connecting the control portion (4a) of the handle (4) with the electronic board (14),
- one or more power supply cables (6c) connecting the battery (33) with the electronic board (14).

In a 70th aspect according to the preceding aspect, the control unit (10) is configured for:
- receiving, by means of said one or more power supply cables (6c), a power signal from the battery (33),
- exchanging signals with said work head (3) and with the control portion (4a) of the handle (4) respectively through said one or more drive cables (6a) and said one or more control cables (6b) so as to control said maintenance operations of a land or garden.

In a 71st aspect according to any one of the two preceding aspects, each drive cable (6a) extends, through the passage opening (26) on the intermediate section (2c) of the main body (2), from the electronic board (14) of the control unit (10) to the work head (3).

In a 72nd aspect according to any one of the three preceding aspects, each drive cable (6a) comprises a preponderant portion (6a') passing through said main body (2) and terminally connected to the work head (3), optionally to the motor (22).

In a 73rd aspect according to any one of the four preceding aspects, each power supply cable (6c) extends, through the passage opening (26) placed on the intermediate section (2c) of the main body (2), from the electronic board (14) to the battery (33).

In a 74th aspect according to any one of the five preceding aspects, each of said one or more drive cables (6a) and said one or more power supply cables (6c) have respective sections exiting from the passage opening (26) of the intermediate section (2c) of the main body (2), located in the/a compartment (23) of the protective casing (15).

In a 75th aspect according to any one of the six preceding aspects, each of said one or more control cables (6b) extends entirely inside the handle (4) from the control portion (4a) to the constraining portion (4b).

In a 76th aspect according to any one of the seven preceding aspects, each of said one or more control cables (6b) has a respective end section (6b') located in the compartment (23) of the protective casing (15).

In a 77th aspect according to any one of the preceding aspects from the 38th to the 76th, the main body (2) has a first and a second element (41, 42) distinct from each other and removably couplable to form a single tubular element.

In a 78th aspect according to the preceding aspect, the machine (1) comprises a connector (40) which constrains respective ends of the first and second element (41, 42) of the main body (2).

In a 79th aspect according to one of the preceding aspects, the connector (40) comprises at least one channel (40a) to allow the passage of gas from the work head (3) towards the battery (33).

In an 80th aspect according to any one of the two preceding aspects, the connector (40) comprises two mechanical constraining components (43a, 43b) at least partly radially outside the main body (2) and associated with respective ends of the first and the second element (41, 42) of the main body (2) to constrain them mechanically.

In an 81st aspect according to any one of the three preceding aspects, the connector (40) comprises two electrical constraining components (44a, 44b) each engaged with a respective mechanical constraining component (43a, 43b) and associated with a respective end of the drive cable (6a) to electrically connect said respective ends of the drive cable itself.

In an 82nd aspect according to any one of the three preceding aspects, the channel (40a) of the connector (40) puts consecutive internal volume portions (25) of the main body (2) defined by the first and second element of the main body itself in fluid communication.

In an 83rd aspect according to any one of the preceding aspects from the 38th to the 82nd, the machine (1) is a brush cutter or a turf trimmer.

### BRIEF DESCRIPTION OF THE DRAWINGS

Some embodiments and aspects of the invention will be described hereinafter with reference to the accompanying drawings, given merely for illustrative, non-limiting purposes in which:
- figure 1 shows a perspective view of a machine for the maintenance of lands or gardens according to the invention,
- figure 2 is a partially interrupted longitudinal section of the machine of figure 1,
- figure 3A shows a perspective view of the work head of the machine of figure 1,
- figure 3B shows the work head of figure 3 in a partially sectioned perspective view,
- figure 4 shows a zone of the main body 2 of the machine of figure 1 in which there is a connection joint between two consecutive parts of the main body 2,
- figure 5 is a sectional perspective view of the zone of the machine of figure 1 in which the handle 4 engages the main body 2,
- figure 6 is a perspective view of the zone of the machine of figure 1 in which the handle 4 engages the main body 2 with some parts removed in order to better display some internal components of the machine itself,
- figure 7 is a further perspective view of the zone of the machine of figure 1 in which the handle 4 engages the main body 2 with some parts removed in order to better display some internal components of the machine itself,
- figure 8 is a plan view of the zone of the machine shown in figure 5 with the handle removed, and
- figure 9 shows an end part opposite the work head of the machine of figure 1.

### DEFINITIONS AND CONVENTIONS

It should be noted that in the present detailed description, corresponding parts illustrated in the various figures are indicated with the same numerical references. The figures could illustrate the object of the invention through non-scale depictions; therefore, the parts and components illustrated in the figures related to the object of the invention could exclusively relate to schematic depictions.

### CONTROL UNIT

The machine disclosed and claimed herein comprises/uses at least one control unit responsible for controlling the operating conditions implemented by the same machine.

The control unit can be a single unit or be formed by a plurality of different control units depending on the design choices and operational needs.

Control unit means an electronic type component which can comprise at least one of: a digital processor (CPU), an analogue type circuit, or a combination of one or more digital processors with one or more analogue type circuits. The control unit can be "*configured*" or "*programmed*" to carry out certain steps: in practice, this can be accomplished by any means that allows the control unit to be configured or programmed. For example, in the case of a control unit comprising one or more CPUs and one or more memories, one or more programs can be stored in appropriate memory banks connected to the CPU(s); the program(s) contains instructions which, when executed by the CPU(s), program or configure the control unit to carry out the operations described in relation to the control unit. Alternatively, if the control unit is/or comprises analogue circuitry, then the circuitry of the control unit can be designed to include circuitry configured, in use, to process electrical signals so as to carry out the steps related to the control unit. Parts of the process described herein can be carried out by a data processing unit, or control unit, technically replaceable with one or more electronic computers designed to perform a portion of software program or firmware loaded on a memory medium. Such a software program can be written in any programming language of known type. Electronic computers, if in number equal to two or more, can be connected to each other by means of a data connection such that their computing powers are in any way shared; the same electronic computers can therefore even be installed in geographically different locations, creating a distributed computing environment through the aforementioned data connection. The data processing unit, or control unit, can be a general purpose processor configured for performing one or more parts of the process identified in the present disclosure through the software or firmware program, or be a dedicated ASIC or processor or an FPGA, specifically programmed to perform at least part of the operations of the process described herein. The memory medium can be non-transitory and can be internal or external to the processor, or control unit, or data processing unit, and can - specifically - be a memory geographically located remotely with respect to the electronic computer. The memory medium can also be physically divided into multiple portions, or in cloud form, and the software or firmware can be stored on geographically divided portions of memory.

### DETAILED DESCRIPTION

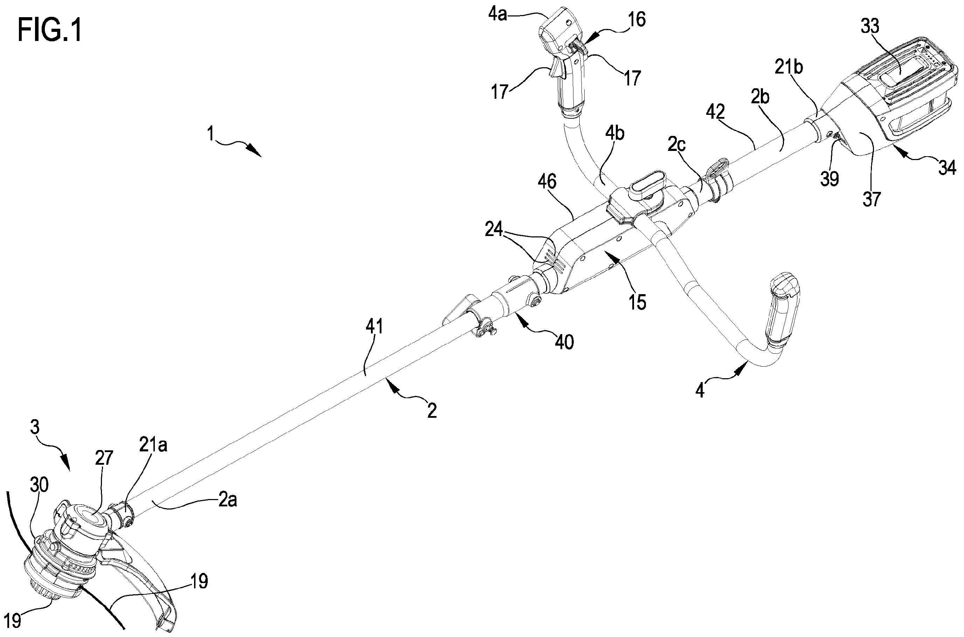

A machine for the maintenance of lands, for example a cutting machine for mowing the turfgrass of a land or a hedge-trimming machine, is indicated overall by the reference number 1. Such a machine 1 is preferably suitable for carrying out the function of hedge trimmer or the function of brush cutter or turf trimmer as shown in figure 1. The machine 1 can be a different machine for the maintenance of lands, for example a lawnmower machine according to air cushion technology. Machines configured to execute scans and/or inspections of land can also be considered machines for the maintenance of lands for the purposes of the present invention. Therefore, the machine 1 can also be a metal-detector machine.

The present machine is portable: for example an operator, during land maintenance operations, can carry the machine by hand or with the aid of a shoulder strap. Therefore, during a working condition, the machine 1 is entirely supported in weight by the operator, without said machine resting on the ground. The weight of the machine of the present invention is therefore congruent with a weight which can be carried by the operator. In this regard, the machine 1 of the present invention can have a total weight comprised between 1 kg and 8 kg, preferably between 4 kg and 6 kg.

The machine 1 comprises a main body 2 extending in length between a first end 2a and a second end 2b along a longitudinal extension axis A. The main body 2 can in fact define a rod extending in a substantially straight manner between the first end 2a and the second end 2b. During a condition of use of the machine 1 in which the latter is for example a lawnmower, the first end 2a can define the bottom portion of the machine 1, i.e., the end portion of the main body 2 closest to the ground with respect to the second end 2b.

The main body 2 can have a substantially circular sectional shape, to define a stem having a cylindrical shape. For example, the main body 2 can have an outer diameter comprised between 10 mm and 60 mm, in particular between 20 mm and 50 mm. Alternatively, the main body 2 can have an elliptical or polygonal sectional shape, for example a square or rectangular section.

The main body 2 can be made of metallic material, for example aluminium or steel, or it can be made of plastic or composite material. The main body 2, regardless of the sectional shape, is at least partly internally hollow. Optionally, the main body 2 has a hollow tubular shape which peripherally delimits an internal volume 25. The main body 2 can extend longitudinally between the first end 2a and the second end 2b for a length comprised between 1000 mm and 1500 mm, optionally between 1050 mm and 1200 mm.

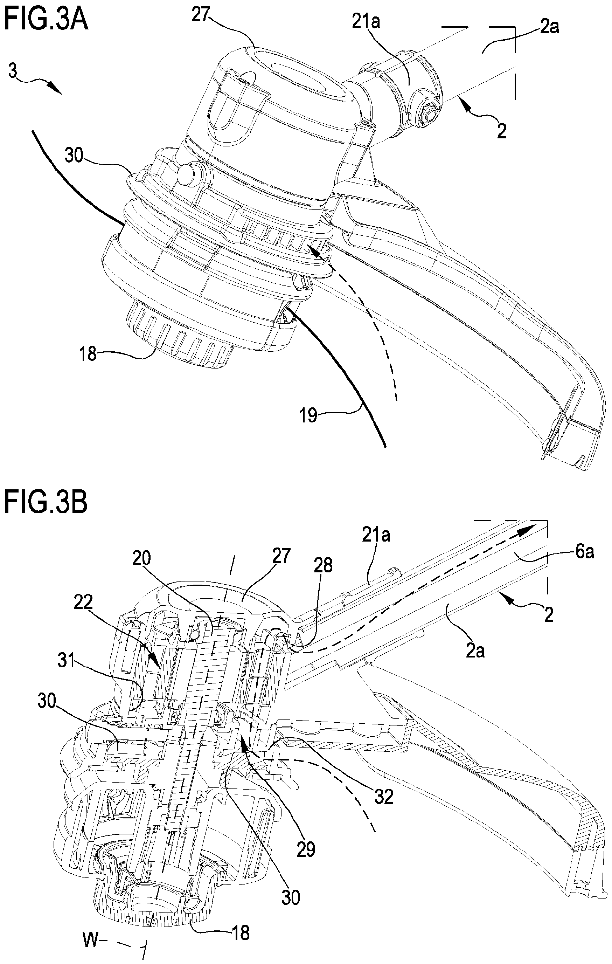

The machine 1 comprises a work head 3 configured to execute land maintenance operations. The work head 3 is for example applied to the main body 2 at the first end 2a. In the embodiment example illustrated in figures 3a and 3B, the work head 3 is configured to execute vegetation cutting operations, e.g., turfgrass cutting operations or plant pruning operations, e.g., trimming a hedge. In this example, therefore, the work head 3 comprises a cutting head 18, e.g., a turf-trimming or grass-cutting head, comprising at least one blade or at least one cutting wire 19, e.g., a nylon wire, for cutting the grass. The cutting head 18 comprises a shaft 20 movable by rotation about a rotation axis W, to which the blades or cutting wire 19 of the work head 3 are engaged. The rotation speed of the shaft 20 during an operating condition of the machine can be comprised between 4000 rpm and 7000 rpm.

During the use of the machine 1, the rotation axis W of the shaft 20 of cutting head 18 is substantially orthogonal to the ground.

In an embodiment, the work head 3 can comprise a motor 22 configured to activate the shaft 20 of the cutting head 18 or the pruning blade. The motor 22 is for example an electric motor, but can alternatively be a combustion engine.

Alternatively, the machine 1 can comprise a motor 22 substantially at the second end 2b of the main body 2, connected to the work head 3 by means of a transmission system inside the main body 2. For example, the transmission system can envisage a direct coupling between the motor 22 and the work head 3, comprising a rod or a shaft connecting between the motor and the work head 3. Alternatively, an indirect coupling can be envisaged between the motor 22 and the work head 3, for example by means of toothed wheels, chains or belts. The motor can have a nominal power comprised between 500 Watts and 3500 Watts.

Further, in the case of a machine 1 with electric motor, said machine can comprise a battery 33 operatively connected to the electric motor 22 and configured to power said motor 22 and rotate the cutting head 18. The battery 33 can be housed at or near the second end 2b of the main body 2.

The machine 1 further comprises a handle 4 configured to allow an operator to grip the machine 1 during maintenance operations. The handle 4 can be mounted, for example removably mounted, to the main body 2 at the second end 2b or at a portion of the main body 2 interposed between the first end 2a and the second end 2b. The handle 4 is preferably arranged closer to the second end 2b than to the first end 2a of the main body 2. Alternatively, the handle 4 can be in a zone which is substantially equidistant from the first end 2a and from the second end 2b of the main body 2.

In an embodiment, the handle 4 has a distance from the work head 3, measured along the main body 2, greater than 200 mm, optionally greater than 300 mm, more optionally comprised between 300 mm and 1500 mm. In an example such a distance can be comprised between 600 mm and 1200 mm.

In accordance with an aspect, the handle 4 is configured to allow the operator to make adjustments in the arrangement of the handle 4 relative to the main body 2. In this regard, it should be specified how the claimed term "arrangement", referring to the handle 4, can include both the position of the handle 4, i.e., the placement of the handle 4 along the main body 2, and the orientation of the handle 4, i.e., the inclination of the handle 4 with respect to the longitudinal extension A of the main body 2. Therefore, the inclination of the handle 4 can be adjusted by rotating it relative to the main body 2 about an orientation axis O transverse, for example orthogonal, to the longitudinal extension axis A of the main body 2. Alternatively or additionally, an adjustment of the handle 4 can be actuated by means of a translation of the handle 4 along the main body 2, moving it closer to or away from the work head 3. Alternatively, an adjustment in the arrangement of the handle 4 can be actuated by means of a rototranslation of the handle 4, i.e., by a movement of the handle 4 which combines a rotation with respect to the main body 2 and a translation of the handle 4 along the main body 2.

The handle 4 can therefore be movable between a first arrangement and a second arrangement, by rotation and/or by translation. In this regard, as will be better disclosed below and in accordance with a possible aspect, the handle 4 is coupled to the main body 2 by means of a support 5 which allows the adjustments just disclosed. The handle 4 is movable by rotation between a first arrangement and a second arrangement about an orientation axis O which, in use, is substantially fixed with respect to the main body 2. In an example, the orientation axis O of the handle 4 remains fixed with respect to the main body 2 during a switching from the first arrangement to the second arrangement and vice versa. The orientation axis O is, as already mentioned, transverse and for example perpendicular to the longitudinal extension axis A of the main body 2.

If the handle is movable by rotation between the first arrangement and the second arrangement about the orientation axis O, the handle 4 is movable by rotation by an angular stroke comprised between 0° and 180°, optionally comprised between 30° and 150°, more optionally comprised between 50° and 120°, for example less than 100°.

In an embodiment capable of offering the possibility of fine and precise adjustments, the handle 4 is rotatably movable between the first arrangement and the second arrangement in a continuous manner. Therefore, the handle 4 can be placed in an ideally infinite number of intermediate arrangements, angularly offset from each other: for example intermediate positions and/or intermediate orientations, between the first arrangement and the second arrangement.

In a further embodiment of the present invention, the handle 4 is rotatably movable between the first arrangement and the second arrangement in a discrete manner. In such a case, the handle 4 can be placed in a plurality of preset intermediate arrangements, for example a finite number of intermediate positions and/or intermediate orientations, between the first arrangement and the second arrangement.

The handle 4 comprises at least one control portion 4a configured to allow a user to grasp the machine 1 and further configured to allow a user to control the maintenance operations of a land or garden executed by the work head 3. The control portion 4a comprises a user interface 16, optionally comprising one or more keys 17 or other contact sensors, configured to receive commands by means of contact with a hand of a user and generate corresponding control signals conveyed to a control unit 10 through one or more cables 6.

The user interface 16 is configured to receive commands by means of contact with a user's hand and generate corresponding control signals conveyed to the control unit 10 through the cables 6.

Furthermore, the handle 4 comprises at least one constraining portion 4b configured to establish a constraint between the control portion 4a and/or the handle 4 and the main body 2. The constraining portion 4b thus coincides with the portion of the handle 4 interposed between the main body 2 and the control portion 4a. The handle 4, the control portion 4a and the constraining portion 4b can be made of metallic and/or plastic and/or composite material.

As previously mentioned, the machine 1 also comprises at least one cable 6 configured to transmit an electrical current and/or to exchange signals and/or to transmit data. The cable 6 can be a monopolar, bipolar or multipolar cable. Such a cable 6 extends between the control portion 4a and the constraining portion 4b.

In a first embodiment, the cable 6 extending between the control portion 4a and the constraining portion 4b, extends for at least a preponderant portion 6a' of the cable itself inside the handle 4.

In a further embodiment of the invention the entire cable 6 extending between the control portion 4a and the constraining portion 4b is inside the handle 4.

Furthermore, the machine 1 can comprise a plug 7 which interacts between the handle 4 and a support 5 integral with the main body 2. The plug 7 extends radially between the constraining portion 4b of the handle 4, i.e., the part of the handle 4 which comes into contact with the support 5, and the support 5. Such a plug 7 has a length comprised between 1 mm and 100 mm, optionally between 5 mm and 50 mm. Such a plug 7 has a width comprised between 1 mm and 100 mm, optionally between 5 mm and 50 mm. The cross section of such a plug 7 can assume a circular, rounded and/or chamfered or polygonal-shaped profile having at least three sides. Such a plug 7 is made of the same material as the handle 4 or of a different material with respect to the material of the handle 4.

Furthermore, the machine 1 can comprise a support 5 defining a seat 8 configured to receive the handle 4. Such a seat 8 has for example a substantially cylindrical shape; in an alternative, the seat 8 has a semicylindrical, semi-rounded shape, and/or a shape mirroring the shape of the handle 4 and/or of the constraining portion 4b. A slot 9 configured to receive the plug 7 is obtained in the seat 8 or in the constraining portion 4b of the handle; the other element between the seat 8 or the constraining portion 4b rigidly carries the plug 7, which is configured to be inserted in the slot 9 and thus limit the maximum angular movement between the plug and the slot and therefore between the handle and the support 5. It should be noted how the plug 7 and the slot 9 can be carried either by the constraining portion 4b of the handle 4 or by the seat 8 of the support 5: if in the drawings the slot is defined on the support 5, the plug is rigidly carried by the handle 4.

The slot 9 has an elongated shape and is configured to receive the plug 7; optionally, such a slot 9 can be substantially symmetrical with respect to a plane of symmetry S, for example, perpendicular to the longitudinal extension axis A of the main body 2. It should be noted how the slot can also be symmetrical with respect to a further plane (not shown) parallel to the longitudinal extension axis A of the body 2.

The slot 9 has a length comprised between 1 mm and 100 mm, optionally between 5 mm and 50 mm. Such a slot 9 has a width comprised between 1 mm and 100 mm, optionally between 5 mm and 50 mm.

In a possible variant, the width and/or length of such a slot 9 has a metric extension whereby, when the slot 9 works in cooperation with the plug 7, the maximum angular excursion of the handle 4 around the orientation axis O is delimited; the maximum angular excursion is less than 180°, optionally less than 100°. Consequently, the user can engage the handle 4 in a stable manner with respect to the main body 2 in any angular position comprised in such a maximum angular excursion.

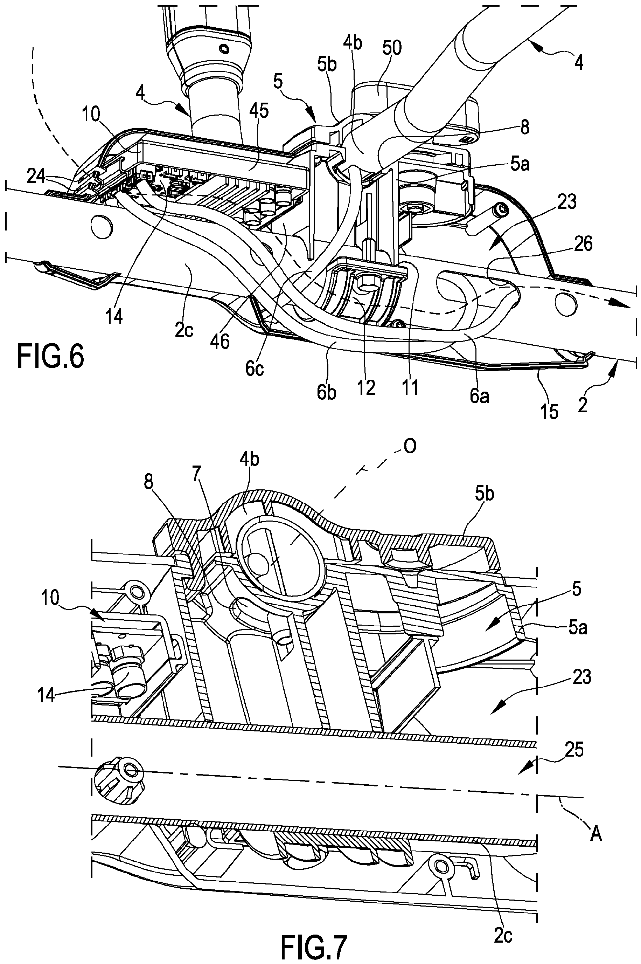

The support 5 comprises at least a first half part 5a and a second half part 5b. The first half part 5a is fixed and/or constrained to the main body 2, while the second half part 5b is adjustable and fixable to the first half part 5a to define the seat 8 and block and/or angularly constrain the constraining portion 4b with respect to the seat 8. The first and the second half part 5a, 5b, in a coupling condition with each other, delimit the seat 8 and receive the coupling portion of the handle 4; optionally, the handle 4 can be placed in an ideally infinite number of intermediate positions each characterized by a different angular position of the constraining portion 4b in the seat 8. The locking of the first half part with the second half part can occur thanks to one or more tightening elements and/or one or more coupling members interacting between the first and the second half part 5a, 5b; in the illustrated exemplary solution, as shown in figure 7, a control knob 50 can be provided which carries a threaded shank 51 passing through a passage provided in the first half part and engaging a tightening nut 52 carried by the second half part 5b: rotating the control knob 50, the threaded shank 51 advances or retreats with respect to the tightening nut 52 to respectively tighten or loosen the engagement between the first and the second half part, allowing to selectively lock or release the engagement of the constraining portion 4b of the handle 4 with respect to the seat 8.

The support 5 can also define a further seat 11 arranged to receive a portion of the main body 2 and allow the adjustment of the position of the support 5 (and thus of the handle 4) along the main body 2 and/or around the longitudinal extension axis A of the latter. For example, the support 5, for example the first half part 5a, can comprise a cover 12 removably engaged to the same first half part 5a on the opposite side with respect to the seat 8 and adapted to form, in cooperation with the first half part 5a, said further seat 11 of possible longitudinal sliding of the support 5 with respect to the main body 2. The cover 12 can be fixed to the rest of the support 2, for example to the first half part 5a with mechanical connections such as threaded elements, snap engagement teeth or still more. Once properly fixed, the cover cooperates with the rest of the support to block the axial and angular sliding of the main body 2 in the seat 11. The support 5, the first half part 5a and the second half part 5b can be made of metallic and/or plastic and/or composite material.

According to a variant embodiment, the machine 1 can further comprise a control unit 10 connected to the cables 6 for receiving/transmitting one or more signals and/or data through such cable(s). For example, the machine 1 can include a plurality of cables 6, namely:
- one or more control cables 6b connecting the control portion 4a with the control unit 10, and
- one or more drive cables 6a connecting the work head 3 with the control unit 10 and/or with the power supply battery 33.

The cables 6a and/or the cables 6b can optionally also be connected to the motor 22, which can alternatively be an electric motor or a combustion engine.

The control unit 10 is configured to exchange signals with the work head 3 and with the control portion 4a respectively through one or more first cables 6a and one or more second cables 6b so as to control the maintenance operations of a land or garden. The control unit 10 comprises at least one electronic board 14, housed in a protective casing 15 fixed to the main body 2.

Each of the drive cables 6a comprises a preponderant portion passing through the main body 2 and terminally connected to the work head 3.

Each of the control cables 6b extends inside the handle 4 from the control portion 4a to the engagement portion 4b and in which an end portion 6b' of each of the cables 6b passes through a through window 13 defined by the first half part 5a of the support 5, to be connected to the control unit 10.

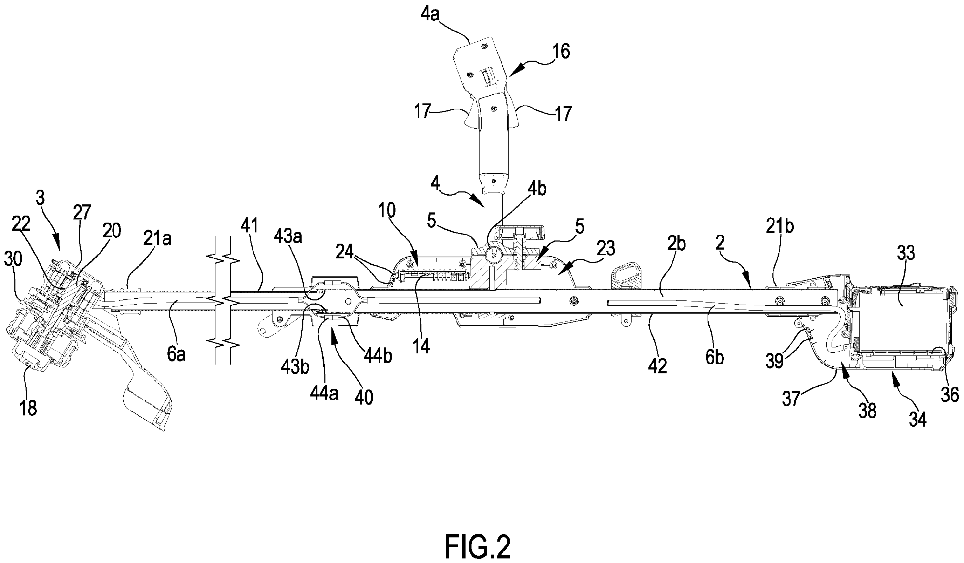

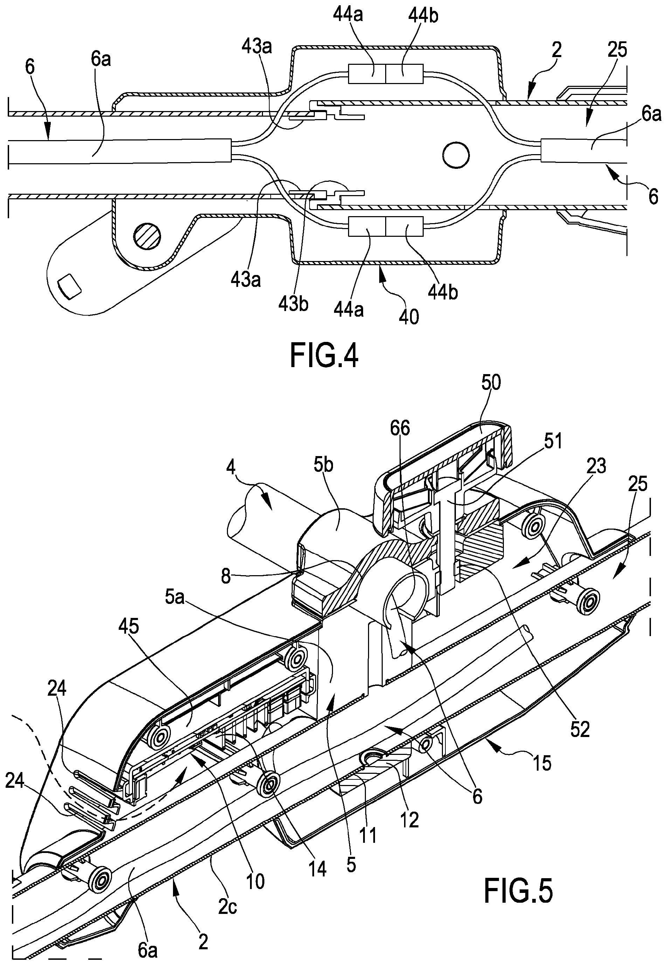

In an embodiment of the present disclosure, for example shown in figures 2, 5 and 6, the main body 2 extends in length parallel to the longitudinal extension axis A, between the first end 2a where the work head 3 is located, up to at the second end 2b where the battery 33 is located. In accordance with what is shown in figure 4, the main body 2 can have a first and a second element 41, 42 distinct from each other and removably couplable to form a single tubular element, The coupling between the first and the second element 41, 42 can be made by means of a connector 40 which constrains the respective ends of the first and second element 41, 42, making a mechanical and optionally electrical connection. In the exemplary embodiment illustrated in figures 2 and 4, the connector 40 can be a tubular body which radially externally surrounds the ends of the first and second element 41, 42 of the main body, defining a channel 40a which puts consecutive parts of internal volume 25 of the main body 2 defined by the first and second element 41, 42 in fluid communication. Alternatively, in an example not shown in the attached figures, the connector 40 can be located radially inside the main body 2. In such an embodiment, the connector 40 can have one or more cavities defining the channel 40a for putting the first and the second element 41, 42 of the main body 2 in communication.

As mentioned, the connector 40 can have two mechanical constraining components 43a, 43b respectively associated with the first and the second element 41, 42 of the main body 2 to mechanically constrain them. The mechanical constraining components 43a, 43b can be snap-fit or other type of fittings, mechanically coupled in a reversible manner. As previously disclosed and further shown in figure 2, since the drive cable 6a has a preponderant part 6a' which passes through the main body 2 and ends in the work head 3 connecting with the motor 22, the connector 40 can further make an electrical connection between ends of the preponderant part 6a' of the drive cable 6a, thus allowing a complete mechanical and electrical decoupling of respective parts of the machine upstream and downstream of the connector 40. The connector 40 can therefore comprise two electrical constraining components 44a, 44b each engaged with a respective mechanical constraining component 43a, 43b and associated with a respective end of the drive cable 6a to electrically connect them. In accordance with what is shown in figure 4, the electrical constraining components 44a, 44b can be located radially externally to the main body 2 without obstructing the channel 40a of the connector itself and allowing the fluid communication between consecutive parts of the internal volume 25 of the main body 2. In a further example not shown in the attached figures, the electrical constraining components 44a, 44b can be located radially inside the main body 2 without obstructing the cavities of the connector itself which define the channel 40a.

As shown in figure 6, the main body 2 can comprise a passage opening 26 inside the protective casing 15 to allow the insertion of the drive cable 6a in the internal volume 25 of the main body itself. In one example the passage opening 26 is located near the electronic board 14 of the control unit 10, allowing the drive cable 6a to reach the work head 3, passing through the passage opening 26 and passing into the internal volume 25 of the main body.

As previously mentioned, the machine can comprise a protective casing 15 located at an intermediate section 2c of the main body 2 interposed between the battery 33 and the work head 3. In an example, the protective casing 15 wraps the intermediate section 2c of the main body 2 to form a compartment 23 which, by means of the passage opening 26, is placed in fluid communication with the internal volume 25 of the main body 2. As for example shown in figures 5 and 6, the protective casing 15 can comprise one or more slits 24 which put the compartment 23 in communication with an environment outside the protective casing itself.

In an example, the electronic board 14 of the control unit 10 can be located at the intermediate section 2c of the main body 2 near the constraining portion 4b of the handle 4. It should be noted how the positioning of the electronic board 14 in an area of the machine 1, spaced apart from the work head 3 where the motor 22 and the battery 33 operate, prevents further overheating of the same electronic board caused by the motor or the battery which could compromise the operation thereof. In an example, the electronic board 14 can be closer to the battery than to the work head 3, at a minimum distance Dm from the battery 33 of a measurement not exceeding 1/3 of an overall extension of the same main body 2 measured along the longitudinal extension axis A. In other words, the electronic board 14 can be spaced from the work head 3 by an amount measured parallel to the longitudinal extension axis A, comprised between 200mm and 1500mm, optionally comprised between 600mm and 1200mm. It should further be noted that by positioning the electronic board 14 in an area of the machine closer to the battery than to the motor 22, the influence of magnetic fields generated by the motor 22 which could cause malfunctions to active components or sensors on the control board 14 can be limited or eliminated altogether. In a further example, the control board 14 can be located inside the protective casing 15 near the slits 24 of the same protective casing, so as to facilitate the cooling thereof.

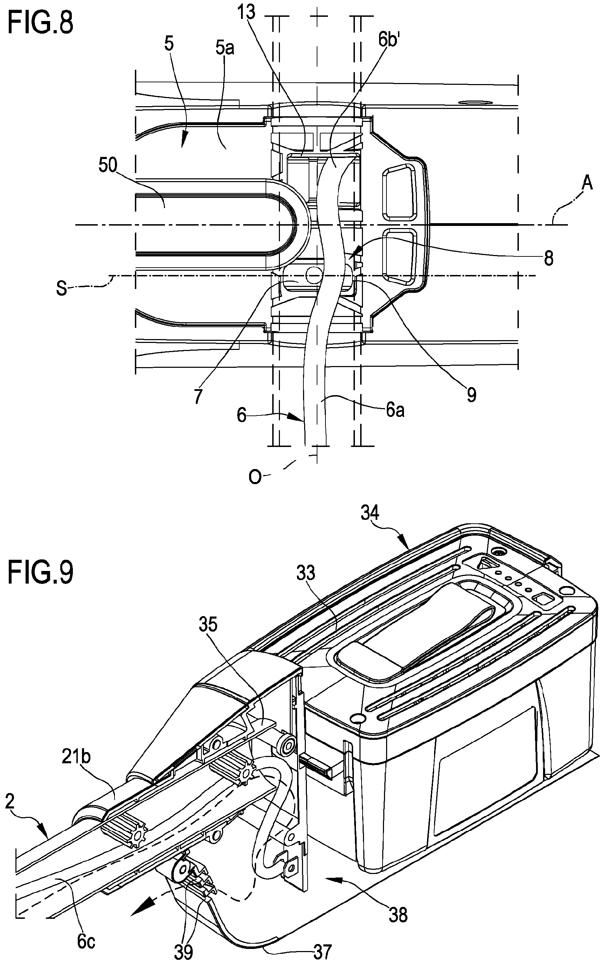

With reference to figures 2, 5 and 6, the machine 1 can comprise a heat sink 45 which contacts and optionally constrains the electronic board 14 to the protective casing 15. The heat sink 45 can be a lamellar heatsink placed in the protective casing 15 and configured to exchange heat with a gas, optionally air, present in the compartment 23 of the same protective casing. In an example, the heat sink 45 comprises at least one dissipation area 46 defining a predominant part of, or all of, an outer peripheral surface of the protective casing 15, thermally connected to the electronic board 14 for transferring heat in an environment outside the machine 1. In other words, the dissipation area 46 can be a plate or an insert made of conductive material such as copper or aluminium, placed at least in part outside the compartment 23 of the protective casing 15 to increase the heat exchange with the environment outside the machine. With reference to figures 3A and 3B, the work head 3 can comprise, in addition to a motor 22 responsible for driving the cutting head 18, a housing 27 engaged with the main body 2 and housing the motor 22. In an example, the housing 27 is engaged to the main body by means of a shank 21a radially outside the main body itself to receive an end section of the first end 2a. The shank 21a can also comprise an access 28 which puts the internal volume 25 of the main body 2 in communication with the motor 22, so as to allow the drive cable 6a to reach the motor itself to power it. The work head can also comprise a fan 30 keyed on the shaft 20 interposed between the cutting head 18 and the motor 22, configured to channel a gas inside the housing 27 and cool the motor 22. As shown in figure 3B, the work head 3 can have a gas passage 29 radially outside the motor 22 and configured to channel towards the internal volume 25 of the main body 2 and through the access 28, the gas introduced in the housing 27 by the fan 30. In an example, the gas passage 29 is radially interposed between a motor stator 22 and an inner surface of the housing 27, extending axially between an end 32 of the housing 27 facing the fan 30 and the access 28. As previously mentioned, the machine comprises a battery 33 located on the side opposite the work head 3 and configured to power the electronic board 14 and the motor 22. The machine can comprise a battery holder 34 engaged to the main body 2 and having a battery support 36 for accommodating the battery 33. With reference to figure 9, the machine 1 can also have an outer shell 37 which at least partially surrounds the battery support 36 and engages, by means of a fitting 21b, the battery holder 34 to the main body 2. The fitting 21b can be radially external to the main body 2 and comprise an inlet 35 which puts the internal volume 25 of the main body 2 in fluid communication with a gap 38 defined between an internal surface of the shell 37 and the battery support 36. The outer shell 37 of the battery holder 34 can also comprise one or more slots 39 that, by means of the gap 38, place the internal volume 25 of the main body 2 in communication with an environment outside the machine 1. The outer shell 37 can also accommodate one or more power supply cables 6c connecting the battery 33 with the electronic board 14. In an example, each power supply cable 6c extends into the internal volume 25 of the main body 2, from the battery 33 up to at the passage opening 26 placed on the intermediate section 2c of the main body 2, where it continues inside the protective casing 15 to connect with the electronic board 14. The power supply cable 6c does not exclusively allow the power supply of the electronic board 14, but further allows, by means of the drive cable 6a and the same electronic board 14, to provide power to the motor 22.

It should further be noted how the machine which is the subject matter of the present disclosure, in addition to preventing the overheating of the electronic board 14 by physically spacing it from the motor 22 and the battery 33, allows to channel an ambient gas or air inside the machine to cool the electronic board 14. In an example, the fan 30 placed near the motor 22 allows, by means of the gas passage 29 and the access 28 on the housing 27, to introduce air into the internal volume 25 of the main body 2, which is channelled towards the battery 33. At the intermediate section 2c of the main body 2, the passage opening 26 allows the introduction into the internal volume 25 of the same main body 2 of gas or air previously introduced into the protective casing 15 by means of the slits 24 (figure 6). Gas or air entering the main body 2 by means of the fan or through the passage opening 26 placed on the main body itself, are further channelled into the battery holder 34, optionally into the gap 38 of the outer shell 37, where they are expelled by means of the slots 39 (figure 9).

## Claims

1. Machine for the maintenance of a land or garden comprising:
- a main body (2) extending in length between a first and a second end (2a, 2b),
- a work head (3) carried by the main body (2) at the first end (2a) and configured to operate on the ground to be maintained,
- a battery (33) carried by the main body (2) at the second end (2b),
- a control unit (10) connected to the work head (3) and to the battery (33),
in which said control unit (10) comprises an electronic board (14) carried by an intermediate section (2c) of the main body (2) between the work head (3) and the battery (33).

2. Machine according to the preceding claim, wherein said electronic board (14) of the control unit (10) is closer to the battery (33) than to the work head (3).

3. Machine according to any one of the preceding claims, wherein the electronic board (14) is at a minimum distance (Dm) from the battery (33) by a measurement not exceeding 1/3 of an overall extension of the same main body (2) measured along a longitudinal extension axis (A),
wherein the electronic board (14) is spaced apart from the work head (3) by an amount measured parallel to the longitudinal extension axis (A) comprised between 200mm and 1500mm, optionally comprised between 600mm and 1200mm.

4. Machine according to any one of the preceding claims comprising a handle (4) constrained to the intermediate section (2c) of the main body (2) and configured to allow a user to grip the machine (1),
wherein the electronic board (14) of the control unit (10) is located near, optionally at, the handle (4),
wherein the handle (4) comprises:
- a control portion (4a) having a user interface (16), optionally comprising one or more keys (17) or other contact sensors, configured to receive commands by means of contact with a hand of a user and generate corresponding control signals to control the operations of the work head (3),
- a constraining portion (4b) engaged to the main body (2), optionally by means of a support (5),
in which the electronic board (14) of the control unit (10) is at the constraining portion (4b).

5. Machine according to any one of the preceding claims, comprising a protective casing (15) which wraps at least part of the intermediate section (2c) of the main body (2) to form a compartment (23) for housing the electronic board (14) of the control unit (10),
optionally wherein the handle (4) is at least partially housed in the compartment (23) of the protective casing (15),
wherein the protective casing (15) comprises one or more slits (24) for placing the compartment (23) in communication with an environment outside the same protective casing (15), wherein said one or more slits (24) face the electronic board (14) of the control unit (10).

6. Machine according to the preceding claim, comprising a heat sink (45), optionally a lamellar heatsink, in contact with the electronic board (14),
optionally wherein the heat sink (45) constrains the electronic board (14) to the protective casing (15), wherein the heat sink (45) comprises at least one dissipation area (46) thermally connected to the electronic board (14) to release heat in an environment outside the machine (1),
even more optionally wherein the dissipation area (46) defines a preponderant part of, or all of, an outer peripheral surface of the protective casing (15), the dissipation area (46) being made of metallic material such as copper or aluminium.

7. Machine according to any one of the preceding claims, wherein the main body (2) has a hollow tubular shape, optionally cylindrical or prismatic tubular, which peripherally delimits an internal volume (25) which places in communication with the work head (3) with the battery (23).

8. Machine according to any one of the three preceding claims, wherein the main body (2) comprises a passage opening (26) defined on the intermediate section (2c) of the same main body, which places the compartment (23) of the protective casing (15) in communication with the/an internal volume (25) of the main body (2),
wherein the passage opening (26) of the main body (2) is inside the protective casing (15).

9. Machine according to any one of the preceding claims, wherein the work head (3) comprises:
- an electric-type motor (22),
- a housing (27) engaged to the main body (2) and housing the motor (22), wherein said housing (27) comprises a shank (21a), radially outside the main body (2) and configured to couple with the first end (2a) of the same main body (2), said shank (21a) having an access (28) which places the/an internal volume (25) of the main body (2) in communication with the motor (22),
wherein the work head (3) further comprises a gas passage (29) radially outside the motor (22) and configured to channel, towards the internal volume (25) of the main body (2) and through the access (28), a gas coming from an environment outside the machine (1),
wherein the gas passage (29) of the work head (3) is radially interposed between the motor (22), optionally a stator of the motor (22), and an inner surface (31) of the housing (27),
and wherein the gas passage (29) of the work head (3) extends axially, parallel to a rotation axis (W) of the motor (22), between the access (28) and an end (32) of the housing (27) opposite the access (28) with respect to the motor (22).

10. Machine according to the preceding claim, wherein the work head (3) further comprises:
- a cutting head (18) carried by the motor (22) and configured to operate on the land to be maintained,
- a shaft (20) connecting the motor (22) to the cutting head (18) for moving, optionally rotating, the same cutting head about a rotation axis (W), parallel to an extension direction of the shaft (20),
- a fan (30) keyed on the shaft (20) in interposition between the cutting head (18) and the motor (22), wherein the gas passage (29) of the work head (3) faces the fan (30) to introduce the gas from an environment outside the machine (1) into the housing (27).

11. Machine according to any one of the two preceding claims when dependent on claim 6, wherein the gas passage (29) of the work head (3) communicates, by means of the main body (2) and the through opening (26) of the same main body, with the compartment (23) of the casing (15).

12. Machine according to any one of the preceding claims, comprising a battery holder (34) engaged to the main body (2) and in turn comprising:
- a battery support (36) configured to accommodate the battery (33),
- an outer shell (37) at least partially surrounding the battery support (36), forming a gap (38),
wherein the outer shell (37) has a fitting (21b) radially outside the main body (2) and configured to couple with the second end (2b) of the same main body (2), said battery fitting (21b) having an inlet (35) which places the/an internal volume (25) of the main body (2) in communication with the gap (38),
wherein the outer shell (37) of the battery holder (34) comprises one or more slots (39) for putting the gap (38) in communication with an environment outside the machine (1), wherein said one or more slots (39) are facing the battery (33).

13. Machine according to any one of the preceding claims, comprising a plurality of cables (6) electrically connected to the electronic board (14) of the control unit (10) and at least in part housed in an/the internal volume (25) of the main body (2),
wherein said plurality of cables (6) comprises:
- one or more drive cables (6a) connecting the work head (3), optionally the motor (22), with the electronic board (14) of the control unit (10),
- one or more control cables (6b) connecting the control portion (4a) of the handle (4) with the electronic board (14),
- one or more power supply cables (6c) connecting the battery (33) with the electronic board (14),
wherein the control unit (10) is configured for:
- receiving, by means of said one or more power supply cables (6c), a power signal from the battery (33),
- exchanging signals with said work head (3) and with the control portion (4a) of the handle (4) respectively through said one or more drive cables (6a) and said one or more control cables (6b) so as to control said maintenance operations of a land or garden,
wherein each drive cable (6a) extends, through the passage opening (26) on the intermediate section (2c) of the main body (2), from the electronic board (14) of the control unit (10) to the work head (3),
wherein each drive cable (6a) comprises a preponderant portion (6a') passing through said main body (2) and terminally connected to the work head (3), optionally to the motor (22),
wherein each power supply cable (6c) extends, through the passage opening (26) placed on the intermediate section (2c) of the main body (2), from the electronic board (14) to the battery (33),
wherein each of said one or more drive cables (6a) and said one or more power supply cables (6c) have respective sections exiting from the passage opening (26) of the intermediate section (2c) of the main body (2), located in the compartment (23) of the protective casing (15).

14. Machine according to any one of the preceding claims, wherein the main body (2) has a first and a second element (41, 42) distinct from each other and removably couplable to form a single tubular element, wherein the machine (1) comprises a connector (40) which constrains respective ends of the first and second element (41, 42) of the main body (2), said connector (40) comprising at least one channel (40a) to allow the passage of gas from the work head (3) towards the battery (33),
wherein the connector (40) comprises:
- two mechanical constraining components (43a, 43b) at least partly radially outside the main body (2) and associated with respective ends of the first and the second element (41, 42) of the main body (2) to constrain them mechanically,
- two electrical constraining components (44a, 44b) each engaged with a respective mechanical constraining component (43a, 43b) and associated with a respective end of the drive cable (6a) to electrically connect said respective ends of the drive cable itself,
wherein the channel (40a) of the connector (40) puts consecutive internal volume portions (25) of the main body (2) defined by the first and second element of the main body itself in fluid communication.

15. Machine according to any one of the preceding claims, wherein said machine (1) is a brush cutter or a turf trimmer.
